# FASCICULE DE BREVET EUROPEEN

(11) **EP 1 795 733 B1**
(45) Date de publication et mention de la délivrance du brevet: **08.09.2010**
(21) Numéro de dépôt: 06291899.0
(22) Date de dépôt: 11.12.2006
(51) Int. Cl.: F02M 35/12, F16L 55/033

(54) **Dispositif d'atténuation des bruits d'un circuit de circulation d'air, notamment pour moteur à combustion interne**
Schalldämpfer zur Verringerung von Luftgeräuschen, insbesondre für interne Brennkraftmaschinen
Device for reducing the noise of an air circulation circuit, in particular for an internal combustion engine

(30) Priorité: 12.12.2005 FR 0512540
(43) Date de publication de la demande: 13.06.2007
(73) Titulaire: Trelleborg Fluid & Acoustic Solutions (TFAS), 44470 Carquefou (FR)
(72) Inventeur: Bosio, Raphael, 44450 Saint Julien de Concelles (FR); Gaudiau, Ghislain, 44150 Ancenis (FR)
(74) Mandataire: Laget, Jean-Loup

(56) Documents cités:
- EP-A2- 1 403 506
- WO-A-99/39087
- DE-U1- 20 113 496
- FR-A- 716 823
- FR-A1- 2 840 652
- JP-A- 60 030 463

## Description

L'invention concerne un dispositif d'atténuation des bruits d'un circuit de circulation d'air, notamment pour moteur à combustion interne, de préférence suralimenté, ou appareil pour climatisation, ce dispositif d'atténuation des bruits se présentant sous forme d'une portion de conduite intégrable, par chacune de ses extrémités constituant respectivement une entrée et une sortie d'air, au circuit de circulation, cette portion de conduite comportant une section de conduite principale délimitant un passage d'air axial reliant l'entrée d'air et la sortie d'air, cette section de conduite principale communiquant, par au moins une ouverture, avec au moins une chambre de détente d'atténuation des bruits délimitant un volume ouvert, les parois de la ou chaque chambre d'atténuation des bruits étant réalisées d'une seule pièce avec la section de conduite principale, la ou chaque chambre d'atténuation des bruits étant fermée par un couvercle.

L'atténuation des bruits dans un circuit d'air, notamment dans le domaine de l'automobile, est un problème bien connu des gens versés dans cet art. Plusieurs dispositifs existent à cet effet, comme celui décrit dans le brevet EP 1 553 284. Ce dispositif se présente sous la forme d'une section de conduite intégrable par chacune de ses extrémités à un circuit de circulation de fluide, lesdites extrémités constituant une entrée et une sortie d'air. Ce dispositif est formé par l'assemblage de deux demi-coquilles raccordées entre elles généralement par soudure, au niveau de l'axe médian du dispositif. Chaque demi-coquille est cloisonnée longitudinalement pour délimiter d'un côté de la cloison des chambres de résonance communiquant avec la section principale de conduite. Ces chambres permettent d'atténuer le bruit créé par la circulation d'air dans le dispositif. Dans le dispositif décrit dans ce brevet, chaque chambre est formée de deux parties, chaque partie étant réalisée sous la forme d'une seule pièce avec une des demi-coquilles constituant la section de conduite principale. Ainsi, le plan de joint entre les demi-coquilles est situé au niveau du plan longitudinal médian passant par les ouvertures de communication entre chambre et section principale de conduite. Le cordon de soudure disposé dans le plan de joint des demi-coquilles est, de par sa position, soumis à un fort cisaillement puisqu'il se trouve sur la trajectoire rectiligne suivie par le flux d'air chaud et sous pression issu de la section de conduite principale et débouchant dans la chambre. La direction du flux d'air est donc parallèle au plan de joint. On constate, régulièrement, dans ce cas, une usure prématurée du cordon de soudure entre les deux demi-coquilles voire un endommagement de la conduite au niveau des chambres de résonance.

Ce problème de l'endommagement précoce du cordon de soudure lié à la réalisation en au moins deux parties de la conduite est également présent dans la demande internationale WO 99/39087 et dans le modèle d'utilité allemand DE-20113496.

Le document JP 60030463 A décrit une canalisation 4 sur laquelle sont fixées des chambres (a, e, c) au moyen de pièces de raccordement (b, f, d) respectivement pour chacune desdites chambres. Lesdites pièces de raccordement ainsi que lesdites chambres ont des caractéristiques dimensionnelles différentes de façon à atténuer une large bande de fréquence. Lesdites chambres, représentées dans les dessins, ne comprennent pas de couvercle et les parois de ces chambres ne sont pas réalisées d'une seule pièce avec la conduite principale.

Le document EP-A2-4.403.503 décrit une canalisation 12 comprenant des ouvertures 13 radiales et des parois 14 s'étendant de façon longitudinale. Lesdites ouvertures 13 sont munies de plaques 17, pourvues de perforations 16, épousant le profil de la canalisation 12. Lesdites ouvertures 13 sont recouvertes d'un couvercle 15. Dans ce document, les parois longitudinales non référencées servant à la délimitation de la chambre d'atténuation des bruits se développent depuis la conduite principale sensiblement parallèles entre elles de sorte que les problèmes rencontrés dans l'état de la technique, à savoir les efforts de cisaillement exercés par le flux d'air sur les soudures dans le plan de joint, ne sont pas résolus.

Dans le document FR-2.840.652, les parois longitudinales de la chambre d'atténuation des bruits s'étendent à nouveau parallèles entre elles. Dans ce document, l'encombrement de l'ensemble est important.

Le document EP 1 403 506 décrit aussi un dispositif d'atténuation des bruits.

Un but de l'invention est donc de proposer un dispositif d'atténuation des bruits dont la tenue dans le temps soit accrue par rapport aux dispositifs existants tout en réduisant l'encombrement de l'ensemble.

A cet effet, l'invention a pour objet un dispositif d'atténuation des bruits d'un circuit de circulation d'air, notamment pour moteur à combustion interne, de préférence suralimenté, ou appareil pour climatisation, ce dispositif d'atténuation des bruits se présentant sous forme d'une portion de conduite intégrable, par chacune de ses extrémités constituant respectivement, une entrée et une sortie d'air, au circuit de circulation, cette portion de conduite comportant une section de conduite principale délimitant un passage d'air axial reliant l'entrée d'air et la sortie d'air, cette section de conduite principale communiquant par au moins une ouverture avec au moins une chambre de détente d'atténuation des bruits délimitant un volume ouvert, les parois de la ou chaque chambre d'atténuation des bruits étant réalisées d'une seule pièce avec la section de conduite principale, la ou chaque chambre d'atténuation des bruits étant fermée par un couvercle, caractérisé en ce que la ou chaque chambre de détente d'atténuation des bruits affecte une forme générale parallélépipédique délimitée par des parois longitudinales et des parois transversales à ladite section de conduite principale, au moins deux parois longitudinales prenant naissance sur la section de conduite principale et s'étendant sur au moins une partie de leur longueur sensiblement orthogonalement entre elles conforme à la revendication 1.

Grâce à cette conception dans laquelle les parois longitudinales de la ou chaque chambre de détente, qui prennent naissance sur la section de conduite principale, s'étendent dans un premier temps sensiblement orthogonalement entre elles depuis cette zone de naissance permet d'une part, de réduire l'encombrement de l'ensemble du dispositif, d'autre part, de réduire les sollicitations tant en traction qu'en cisaillement exercées par le flux d'air sur le plan de fermeture et en particulier sur les soudures servant à la fixation du couvercle aux parois de la chambre.

En effet, selon un mode de réalisation préféré de l'invention, l'une des deux parois longitudinales sensiblement orthogonales, qui prennent naissance sur la section de conduite principale, est coudée, de préférence à angle droit, pour se prolonger suivant une disposition parallèle avec la première paroi longitudinale et former avec le bord libre de cette dernière un plan de réception par appui du couvercle.

Dans ce mode de réalisation préféré de l'invention, le plan de fermeture du couvercle de la chambre d'atténuation des bruits forme un angle avec le flux de circulation de fluide s'échappant de la section de conduite principale, de manière à réduire significativement les sollicitations exercées par ce flux sur ledit plan de fermeture. La disposition décalée de la chambre et le positionnement du plan de fermeture permettent d'obtenir un tel résultat.

La fermeture de la ou des chambres de résonance par un couvercle permet de décaler le cordon de soudure servant à l'assemblage du couvercle par rapport au reste du dispositif. Le cordon de soudure est alors soumis à un effort de traction/compression et non de cisaillement. Dans ce cas, la direction du flux d'air, issu de la section de conduite principale et débouchant dans une chambre, forme un angle avec le plan de joint, de sorte qu'outre une suppression des efforts de cisaillement, on constate une réduction des efforts de traction/compression exercés sur ledit couvercle.

L'invention sera bien comprise à la lecture de la description suivante d'exemples de réalisation, en référence aux dessins annexés dans lesquels :
La figure 1 représente une vue en perspective d'un dispositif d'atténuation des bruits en position ouverte du couvercle des chambres de résonance,
La figure 2 représente une vue en perspective du dispositif de la figure 1 en position fermée du couvercle,
La figure 3 représente une vue en coupe d'un autre mode de réalisation de l'invention,
La figure 4 représente une vue en coupe d'un autre mode de réalisation de l'invention et
La figure 5 représente une vue en coupe d'un autre mode de réalisation de l'invention.

Comme mentionné ci-dessus, le dispositif d'atténuation des bruits, objet de l'invention, est destiné à être installé sur un circuit d'admission d'air pour moteur à combustion interne, de préférence suralimenté, ou sur un circuit d'admission d'air pour un appareil de climatisation. En effet, les bruits à atténuer sont notamment ceux issus du turbocompresseur et/ou du moteur et/ou de l'appareil de climatisation du véhicule. Dans l'exemple qui suit, on supposera que le dispositif d'atténuation des bruits est disposé dans la zone du circuit d'admission d'air s'étendant entre un turbocompresseur et un refroidisseur apte à refroidir l'air issu du turbocompresseur. Cette disposition privilégiée permet de réunir en un seul et même élément des fonctions d'atténuation des bruits et de conduite rigide de circulation d'air qui, pendant longtemps, étaient réalisées sous forme de deux éléments différenciés.

Ce dispositif d'atténuation des bruits se présente sous forme d'une portion 1 de conduite intégrable par chacune de ses extrémités au circuit d'admission d'air. L'une des extrémités de la portion 1 de conduite constitue une entrée 9 d'air tandis que l'autre extrémité constitue une sortie 10 d'air. Dans les exemples représentés, la portion 1 de conduite présente à chacune de ses extrémités une section de dimension réduite pour constituer un embout de raccordement solidarisable au reste du circuit d'admission d'air, de préférence par soudure étanche. Ainsi, les embouts de raccordement, formés d'une seule pièce avec la portion 1 de conduite, s'étendent à chacune des extrémités de la portion 1 de conduite au-delà de l'épaulement formé par le rétrécissement de la section. Il est également possible de disposer d'une conduite équipée, à au moins l'une de ses extrémités, d'une ramification sans sortir du cadre de l'invention.

L'objet de l'invention concerne tout particulièrement les moyens d'atténuation du bruit équipant cette portion 1 de conduite rigide du dispositif. Dans ce cas, ces moyens sont constitués par des chambres 4 de détente, communiquant par des ouvertures 3 avec la section de conduite 2 principale afin d'atténuer les vibrations de l'air qui y pénètre. Dans les exemples représentés en annexe, la portion 1 de conduite comporte une pluralité de chambres 4 de détente, dites série de chambres 4, s'étendant le long d'une génératrice de la section de conduite 2 principale, cette section de conduite 2 principale délimitant un passage d'air axial reliant l'entrée 9 et la sortie 10 d'air de la portion 1 de conduite. La section de conduite 2 principale et la ou les chambres 4 de détente sont réalisées d'une seule pièce, seul le ou les couvercles 6 étant rapportés.

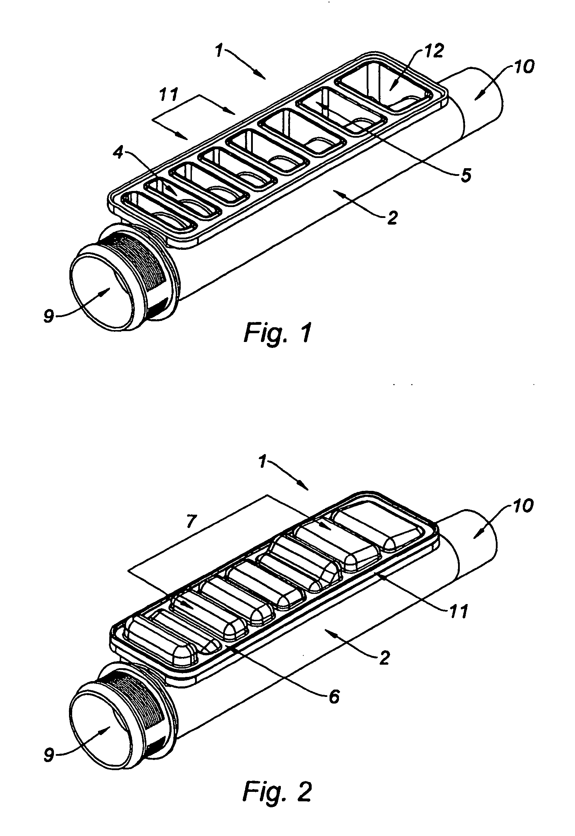

La figure 1 représente une vue en perspective du dispositif, le couvercle 6 des chambres 4 ayant été enlevé. Dans l'exemple représenté, chaque chambre 4 de détente affecte une forme générale parallélépipédique délimitée par des parois 5 longitudinales et des parois 12 transversales à ladite section de conduite 2 principale, en particulier à l'axe longitudinal de ladite section de conduite principale.
En effet, les parois 5 longitudinales s'étendent sensiblement parallèlement à l'axe longitudinal de la section de conduite principale ou à la direction principale de circulation du flux d'air dans ladite conduite tandis que les parois 12 transversales s'étendent sensiblement orthogonalement audit axe longitudinal de la section de conduite; Au moins deux parois 5 longitudinales prennent naissance sur la section de conduite 2 principale et s'étendent dans un premier temps sensiblement orthogonalement entre elles à partir de cette zone de naissance ou de raccordement à la section de conduite 2 principale. Les parois 10 transversales s'étendent sensiblement perpendiculairement aux parois 5 longitudinales. L'une des deux parois 5 longitudinales orthogonales, qui prennent naissance sur la section de conduite 2 principale, est coudée, de préférence à angle droit, pour se prolonger suivant une disposition parallèle avec la première paroi longitudinale et former avec le bord libre de cette dernière un plan de réception par appui d'un couvercle 6. De manière caractéristique, ces chambres 4, qui délimitent un volume ouvert fermé par un couvercle, sont réalisées d'une seule pièce avec la section de conduite 2 principale de manière à assurer un raccordement résistant entre la section de conduite 2 principale, elle-même réalisée d'une seule pièce et les chambres 4. Ces chambres 4 peuvent éventuellement communiquer entre elles en fonction des besoins de l'utilisateur, besoins liés à l'environnement dans lequel est placé le dispositif.

Pour des raisons dues au moulage de la pièce, le dispositif, objet de l'invention, doit être réalisé en au moins deux pièces, à savoir couvercle d'une part, chambre(s) et section de conduite principale d'autre part. Ces deux pièces sont ensuite raccordées entre elles par soudure. Comme représenté à la figure 2, les chambres 4 de détente sont des chambres ouvertes fermées à leur sommet par au moins un couvercle 6 coiffant chaque ouverture. Le ou les couvercle(s) 6 sont soudés à chaque chambre 4. Un même couvercle peut être commun à plusieurs chambres 4. De manière équivalente, chaque chambre 4 peut être pourvue de son propre couvercle. Les couvercles 6 peuvent adopter des tailles, des volumes et des formes différents suivant les besoins. Dans le mode de réalisation où les chambres 4 d'une série de chambres 4 sont fermées par un couvercle 6 commun, il en résulte une économie de pièces et de soudure. Dans le cas notamment d'un unique couvercle 6 pour une série de chambres 4, le couvercle 6 peut comporter, au droit d'au moins une chambre 4 de détente, un bossage 7 d'accroissement de volume de ladite chambre 4. On peut ainsi ajuster à volonté les propriétés acoustiques de chaque chambre 4 en disposant d'un seul couvercle 6.

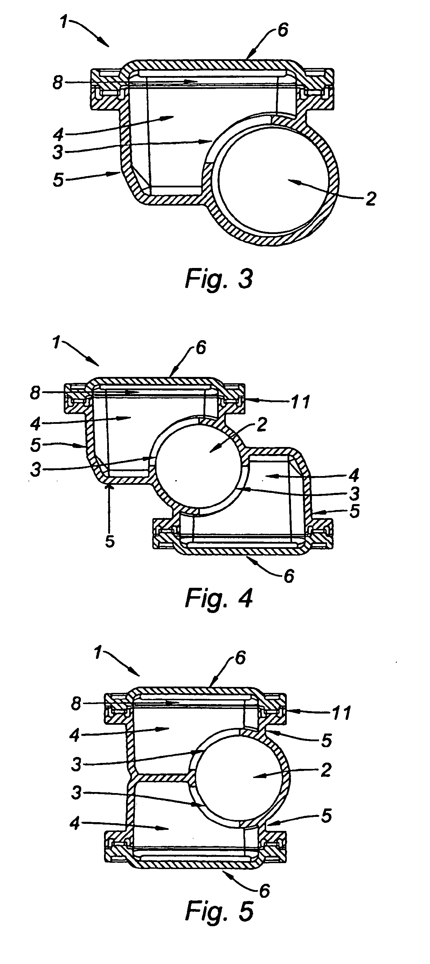

Dans un mode de réalisation avec un seul couvercle 6 pour une pluralité de chambres 4, ledit couvercle, à l'état fermé, peut permettre une communication de fluide entre lesdites chambres 4 de détente. En effet, comme représenté à la figure 3, le couvercle 6 peut être conçu de manière à laisser libre un espace 8 au-dessus du bord libre de la paroi transversale de chaque chambre 4. L'air est dans ce cas apte à passer d'une chambre 4 à une chambre contiguë par l'espace 8 ménagé entre le bord libre d'une paroi transversale de la chambre 4 et le couvercle 6. Dans un autre mode de réalisation, le couvercle 6, à l'état fermé, obture la communication entre lesdites chambres 4 de détente. Dans ce cas, non représenté aux figures, le couvercle 6 présente des formes complémentaires des ouvertures libres de chaque chambre 4 afin de les obturer et d'empêcher le passage d'air d'une chambre à une autre autrement qu'à travers la section de la conduite 2 principale. Le mode de réalisation choisi dépend des caractéristiques acoustiques souhaitées.

Dans les dispositifs représentés aux figures 3, 4 et 5, l'axe longitudinal médian des chambres 4 d'atténuation des bruits est déporté par rapport à l'axe central de la section de conduite 2 principale. Dans les figures 4 et 5, la portion 1 de conduite comporte au moins deux séries de chambre 4 de détente alignées, en parallèle, le long de la section de conduite 2 principale. Ces séries peuvent être disposées opposées, en particulier diamétralement opposées par rapport à la section de conduite 2 principale comme représenté à la figure 4. Elles peuvent également être côte à côte, comme à la figure 5, de manière à présenter une paroi 5 longitudinale commune. Le nombre de chambres 4 par série, le nombre de séries de chambres et leur disposition, le nombre et la forme des couvercles sont des paramètres permettant de régler l'efficacité acoustique du dispositif et de l'adapter à son environnement. Dans sa plus simple expression, le dispositif comporte une seule chambre 4 fermée par un couvercle 6 et communiquant par une ouverture 3 avec la section de conduite 2 principale.

## Revendications

1. Dispositif d'atténuation des bruits d'un circuit de circulation d'air pour moteur à combustion interne suralimenté, ce dispositif d'atténuation des bruits, apte à être disposé dans la zone du circuit d'admission d'air, s'étendant entre un turbocompresseur et un refroidisseur de l'air issu du turbocompresseur, comprenant une portion (1) de conduite intégrable, par chacune des extrémités de la portion (1) constituant respectivement, une entrée (9) et une sortie (10) d'air, au circuit de circulation, cette portion (1) de conduite comportant une section de conduite (2) principale délimitant un passage d'air axial reliant l'entrée (9) d'air et la sortie (10) d'air, cette section de conduite (2) principale communiquant par au moins une ouverture (3) avec au moins une chambre (4) de détente d'atténuation des bruit appartenant au dispositif et délimitant un volume ouvert, les parois de la ou chaque chambre d'atténuation des bruits étant réalisées d'une seule pièce avec la section de conduite principale de sorte que la section de conduite (2) principale et la ou les chambres (4) de détente sont réalisées d'une seule pièce, la ou chaque chambre d'atténuation des bruits affectant une forme générale parallélépipédique délimitée par des parois (5) longitudinales et des parois (12) transversales à ladite section de conduite (2) principale et étant fermée par un couvercle appartenant au dispositif,
**caractérisé en ce que** au moins deux parois (5) longitudinales de la ou chaque chambre (4) de détente d'atténuation des bruits prennent naissance sur la section de conduite (2) principale et s'étendent sur au moins une partie de leur longueur sensiblement orthogonalement entre elles, l'une des deux parois (5) longitudinales sensiblement orthogonales étant coudée pour se prolonger suivant une disposition parallèle avec la première paroi (5) longitudinale et former avec le bord libre de cette dernière un plan de réception par appui du couvercle (6).

2. Dispositif selon la revendication 1,
**caractérisé en ce que** l'une des deux parois (5) longitudinales, sensiblement orthogonales, qui prennent naissance sur la section de conduite (2) principale, est coudée à angle droit pour se prolonger suivant une disposition parallèle avec la première paroi (5) longitudinale et former avec le bord libre de cette dernière un plan de réception par appui du couvercle (6).

3. Dispositif selon la revendication 1,
**caractérisé en ce que** le couvercle (6) comporte, au droit d'au moins une chambre (4) de détente, un bossage (7) d'accroissement de volume de ladite chambre (4).

4. Dispositif selon la revendication 1,
**caractérisé en ce que** la portion (1) de conduite comporte une pluralité de chambres (4) de détente, dites série de chambres (4), s'étendant le long d'une génératrice de la section de conduite (2) principale.

5. Dispositif selon la revendication 4,
**caractérisé en ce que** la portion (1) de conduite comporte au moins deux séries de chambres (4) de détente alignées en parallèle, le long de la section de conduite (2) principale.

6. Dispositif selon l'une des revendications 4 et 5,
**caractérisé en ce que** les chambres (4) de détente d'une série de chambres (4) sont fermées par un couvercle (6) commun

7. Dispositif selon l'une des revendications 4 à 6,
**caractérisé en ce que** le couvercle (6), à l'état fermé, permet une communication de fluide entre lesdites chambres (4) de détente.

8. Dispositif selon l'une des revendications 4 à 6,
**caractérisé en ce que** le couvercle (6), à l'état fermé, obture la communication entre lesdites chambres (4) de détente.

9. Dispositif selon l'une des revendications 1 à 8,
**caractérisé en ce que** l'axe longitudinal médian des chambres (4) d'atténuation des bruits est déporté par rapport à l'axe central de la section de conduite (2) principale.

## Claims

1. A device for attenuating noise from an air circulation circuit for a boosted internal combustion engine, the noise attenuation device being adapted to be arranged in the area of the air intake circuit, extending between a turbocharger and a cooler of the air from the turbocharger, comprising a duct portion (1), which can be integrated by each of the ends of the portion (1), respectively composing an air inlet (9) and an air outlet (10), into the circulation circuit, the duct portion (1) having a main duct section (2) defining an axial air passage connecting the air inlet (9) to the air outlet (10), the main duct section (2) communicating through at least one opening (3) with at least one noise attenuation expansion chamber (4) belonging to the device and defining an open volume, with the walls of the or each noise attenuation chamber being made integrally with the main duct section so that the main duct section (2) and the expansion chamber(s) (4) are made integrally, the or each noise attenuation chamber adopting a general block shape defined by longitudinal walls (5) and transverse walls (12) to said main duct section (2) and being closed by a lid belonging to the device,
**characterized in that** at least two longitudinal walls (5) of the or each noise attenuation expansion chamber (4) stem from the main duct section (2) and extend over at least one part of the length thereof substantially orthogonally to each other, one of the two substantially orthogonal longitudinal walls (5) being bent so as to continue in an arrangement parallel to the first longitudinal wall (5) and form with the free edge of the latter a plane to bearingly receive the lid (6).

2. The device according to claim 1, **characterized in that** one of the two substantially orthogonal longitudinal walls (5) stemming from the main duct section (2) is bent at right angles so as to continue in an arrangement parallel to the first longitudinal wall (5) and form with the free edge of the latter a plane to bearingly receive the lid (6).

3. The device according to claim 1, **characterized in that** the lid (6) has in alignment with at least one expansion chamber (4) a boss (7) for increasing the volume of said chamber (4).

4. The device according to claim 1, **characterized in that** the duct portion (1) has a plurality of expansion chambers (4), a so-called chamber series (4), extending along a surface line of the main duct section (2).

5. The device according to claim 4, **characterized in that** the duct portion (1) has at least two expansion chamber series (4) aligned in parallel, along the main duct section (2).

6. The device according to any of claims 4 and 5, **characterized in that** the expansion chambers (4) of a chamber series (4) are closed by a common lid (6).

7. The device according to any of claims 4 to 6, **characterized in that** the lid (6), in the closed state, allows for fluid communication between said expansion chambers (4).

8. The device according to any of claims 4 to 6, **characterized in that** the lid (6), in the closed state, is sealing the communication between said expansion chambers (4).

9. The device according to any of claims 1 to 8, **characterized in that** the medial longitudinal axis of the noise attenuation chambers (4) is remote from the center axis of the main duct section (2).

## Patentansprüche

1. Vorrichtung zur Schalldämpfung eines Luftzirkulationskreises für einen turboaufgeladenen Brennkraftmaschine, wobei diese schalldämpfende Vorrichtung dazu geeignet ist, in dem Bereich des Lufteintrittskreises angeordnet zu werden, der sich zwischen einem Turbolader und einem Kühler der Luft aus dem Turbolader erstreckt, umfassend einen Rohrabschnitt (1), der über jedes der Enden des Abschnitts (1), die jeweils einen Lufteinlass (9) und einen Luftauslass (10) bilden, in den Zirkulationskreis integrierbar ist, wobei dieser Rohrabschnitt (1) ein Hauptrohrstück (2) umfasst, das einen axialen Luftdurchgang begrenzt, der den Lufteinlass (9) mit dem Luftauslass (10) verbindet, wobei dieses Hauptrohrstück (2) über mindestens eine Öffnung (3) mit mindestens einer schalldämpfenden Entspannungskammer (4), die zu der Vorrichtung gehört und ein offenes Volumen begrenzt, in Verbindung steht, wobei die Wände der oder jeder schalldämpfenden Kammer mit dem Hauptrohrstück einstückig ausgebildet sind, so dass das Hauptrohrstück (2) und die Entspannungskammer(n) (4) einstückig ausgebildet sind, wobei die oder jede schalldämpfende Kammer eine allgemeine Quaderform annimmt, die durch Längswände (5) und Querwände (12) zum Hauptrohrstück (2) begrenzt wird, und durch einen Deckel verschlossen wird, der zu der Vorrichtung gehört,
**dadurch gekennzeichnet, dass** mindestens zwei Längswände (5) der oder jeder schalldämpfenden Entspannungskammer (4) aus dem Hauptrohrstück (2) hervorgehen und sich über mindestens einen Teil der Länge desselben im Wesentlichen zueinander orthogonal erstrecken, wobei eine der beiden im Wesentlichen orthogonalen Längswände (5) abgewinkelt ist, um sich in einer Anordnung, die zu der ersten Längswand (5) parallel ist, zu verlängern und mit deren freier Kante eine Ebene zur stützenden Aufnahme des Deckels (6) zu bilden.

2. Vorrichtung nach Anspruch 1, **dadurch gekennzeichnet, dass** eine der beiden im Wesentlichen orthogonalen Längswände (5), die aus dem Hauptrohrstück (2) hervorgehen, im rechten Winkel abgewinkelt ist, um sich in einer Anordnung, die zu der ersten Längswand (5) parallel ist, zu verlängern und mit deren freier Kante eine Ebene zur stützenden Aufnahme des Deckels (6) zu bilden.

3. Vorrichtung nach Anspruch 1, **dadurch gekennzeichnet, dass** der Deckel (6) fluchtrecht zu mindestens einer Entspannungskammer (4) eine Erhebung (7) aufweist, um das Volumen der Kammer (4) zu vergrößern.

4. Vorrichtung nach Anspruch 1, **dadurch gekennzeichnet, dass** der Rohrabschnitt (1) eine Vielzahl von Entspannungskammern (4) aufweist, die als Kammerreihe (4) bezeichnet wird, die sich an einer Mantellinie des Hauptrohrstücks (2) entlang erstreckt.

5. Vorrichtung nach Anspruch 4, **dadurch gekennzeichnet, dass** der Rohrabschnitt (1) mindestens zwei Entspannungskammerreihen (4) aufweist, die parallel an dem Hauptrohrstück (2) entlang ausgerichtet sind.

6. Vorrichtung nach einem der Ansprüche 4 und 5, **dadurch gekennzeichnet, dass** die Entspannungskammern (4) einer Kammerreihe (4) durch einen gemeinsamen Deckel (6) geschlossen werden.

7. Vorrichtung nach einem der Ansprüche 4 bis 6, **dadurch gekennzeichnet, dass** der Deckel (6) im geschlossenen Zustand eine Strömungsverbindung zwischen den Entspannungskammern (4) ermöglicht.

8. Vorrichtung nach einem der Ansprüche 4 bis 6, **dadurch gekennzeichnet, dass** der Deckel (6) im geschlossenen Zustand die Verbindung zwischen den Entspannungskammern (4) abdichtet.

9. Vorrichtung nach einem der Ansprüche 1 bis 8, **dadurch gekennzeichnet, dass** die Längsmittelachse der schalldämpfenden Kammern (4) im Verhältnis zur mittleren Achse des Hauptrohrstücks (2) verlagert ist.
